(19) Europäisches Patentamt
European Patent Office
Office européen des brevets

(11) Publication number: 0 336 129 B1

(12) EUROPEAN PATENT SPECIFICATION

(45) Date of publication of patent specification: 21.09.94

(51) Int. Cl.5: C08F 212/14, C08F 220/10, C08G 18/72, //C09D133/04

(21) Application number: 89103984.4

(22) Date of filing: 07.03.89

# (54) Room temperature curing, alternating isopropenyldimethylbenzylisocyanate copolymers having high isocyanate fuctionality.

(30) Priority: 04.04.88 US 177208

(43) Date of publication of application:
11.10.89 Bulletin 89/41

(45) Publication of the grant of the patent:
21.09.94 Bulletin 94/38

(84) Designated Contracting States:
AT BE CH DE ES FR GB GR IT LI NL SE

(56) References cited:
EP-A- 0 130 323
EP-A- 0 164 521
DE-A- 1 745 279

(73) Proprietor: AMERICAN CYANAMID COMPANY
1937 West Main Street
P.O. Box 60
Stamford Connecticut 06904-0060 (US)

(72) Inventor: Alexanian, Vazken
11 Renshaw Road
Darien Connecticut 06820 (US)
Inventor: Lees, Robert G.
110 Woodridge Drive South
Stamford Connecticut 06902 (US)
Inventor: Fiori, Denise E.
32 Salem Road
Trumbull Connecticut (US)

(74) Representative: Diehl, Hermann O. Th., Dr.
Diehl & Glaeser, Hiltl & Partner
Patentanwälte
Postfach 19 03 65
D-80603 München (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 336 129 B1

## Description

### Background of the Invention

#### Field of the Invention:

This invention relates to isocyanate functional copolymers which permit low temperature crosslinking of curable compositions.

#### Description of the Prior Art:

United States Patent No. 3,290,350 discloses the copolymerization of isopropenyldimethylbenzylisocyanate with ethylene using free-radical type initiators. The resultant copolymers are of poor solubility in benzene and low isocyanate content.

German Patent 1,745,279 describes in Example 5 the azo catalyzed copolymerization of p-TMI with methyl acrylate at a low 82% conversion.

United States patent application S.N. 499,961 filed June 1, 1982, and now abandoned, describes copolymers of meta- or para-isopropenyl-α,α-dimethylbenzyl-isocyanate (hereinafter, "m/p TMI") with certain unsaturated comonomers. The text of patent application S.N. 499,961 has been published by the European Patent Office as EP 0 130323 A2. The primary technical disclosure of S.N. 499,961 is the use of a relatively high molecular weight isocyanate polymer (e.g., M.W. 6400-17400) in conjunction with a low molecular weight polyhydroxy compound (e.g., diethylene glycol, 1,2,6-hexanetriol, trimethylolpropane). S.N. 499,961 exemplified copolymers were not able to successfully cure in combination with low molecular weight polyols at room temperature within a period of four days. The single instance of room temperature cure recited in S.N. 499,961 was for a high molecular weight terpolymer "Y" containing 15 mole percent m-TMI, 40 mole percent butylacrylate, and 45 mole percent methylmethacrylate cured with trimethylolpropane cured in seven days using unconventionally high levels of tin curing catalyst (viz., 1% organotin compound based on weight of terpolymer solids). Moreover, at room temperature, the formulation of terpolymer "Y" and trimethylolpropane was not homogeneous.

Patent application 563,882 filed December 21, 1983, now abandoned, and copending patent application 07/113,337 filed October 22, 1987 are continuations-in-part of S.N. 499,961 and describe copolymers of m/p TMI with various unsaturated comonomers. These patent applications contain a single exemplification of a seven day room temperature cure.

Subsequent experimentation has failed to achieve a consistent 4 day or less room temperature cure by following the examples or general teaching of S.N. 499,961 or its continuation-in-part applications.

None of the prior art copolymers of m/p-TMI possess all of the combined advantageous properties required for a practical isocyanate functional copolymeric crosslinking agent.

It is desirable to prepare m/p TMI copolymers which have the following collective advantages over the prior art:

1. Room temperature curable in 4 days or less.
2. High isocyanate functionality (over 40 mole % m/p TMI)
3. High Organic solvent solubility
4. Low molecular weight
5. Ability to cure polyhydroxy, carboxy, or amino bearing materials.
6. Low residual m/p TMI.

### SUMMARY OF THE INVENTION

This invention is a substantially alternating, organic solvent soluble, crosslinking copolymer having a molecular weight (Mn) of from 2000 to 4000 and a polydispersity (d) of no more than 2.2, having at least 8 weight percent of unreacted isocyanate moieties and containing monomeric units derived from monomers consisting essentially of (i) 40 to 50 mole percent of an isopropenyl-α,α-dimethylbenzyl isocyanate, and (ii) 60 to 45 mole percent of an unsaturated ester, and (iii) from 0 to 5 mole percent of an non-isocyanate reactive polymerizable monomer.

This invention is also a process for preparing room temperature curing copolymers said process comprising the following steps:

A) simultaneously adding reactor charge materials comprising:

1. 40 to 50 mole percent meta-/para-isopropenyl-α,α-dimethylbenzyl isocyanate monomer;

2. 60 to 45 mole percent unsaturated ester monomer,
3. 0 to 5 mole percent non-isocyanate reactive unsaturated monomer,
4. a perester free-radical initiator,
5. optionally, a solvent, and
6. optionally, a chain transfer agent.

B) introducing the reactor charge of step (A) into a reaction zone containing a non-isocyanate reactive solvent, with the proviso that the weight ratio of total monomers to total solvent in the reactor zone is from 2:1 to 20:1;

C) maintaining the reaction zone of step (B) containing reactor charge (A) at a temperature and for a time sufficient to polymerize at least 99 weight percent of the meta-/para-isopropenyl-α,α-dimethylbenzyl isocyanate monomer.

This invention is also a curable composition comprising (i) a crosslinking copolymer of m/p TMI and (ii) an isocyanate reactive material, as defined in claim 6.

This invention is also a room temperature curable composition comprising (i) a crosslinking copolymer of m/p TMI, (ii) an isocyanate reactive material, and (iii) a curing catalyst, as defined in claim 8.

This invention is also a crosslinked article or coating formed from heat activating the curable compositions of the invention.

## DETAILED DESCRIPTION OF THE INVENTION

### Characteristics of the Copolymer of the Invention:

The m/p TMI copolymers of the invention have the following defining characteristics:

1. Room temperature cure with isocyanate reactive materials (within four days at 25°C.).
2. Highly soluble in organic solvents.
3. Contain from 40 to 50 mole percent of units derived from m/p TMI.
4. Reactive isocyanate functionality of at least about 8 weight percent.
5. Molecular weight (Mn) of from 2000 to 4000.
6. Low residual m/p TMI.

The copolymers of this invention are not limited by any theory of structure but it is believed that they are substantially alternating and linear, that is, the copolymer units derived from m/p TMI are bonded only to units derived from another polymerizable unsaturated comonomer (non-m/p TMI). Therefore, the m/p TMI mole proportion of the copolymer of the invention does not exceed 50 mole percent.

The alternating character of the copolymer of the invention is maintained by the polymerization method taught herein. The comonomer is required to be an unsaturated ester, however, some slight variation of composition is possible. Such variation may occur by the inclusion of small (up to 5 mole percent) non-interfacing amounts of unsaturated non-isocyanate reactive comonomers, so that copolymer products having as little as 40 mole percent of units derived from m/p TMI are considered "alternating" within the meaning of this invention. However, the preferred alternating copolymers of this invention contain at least 47 mole percent of units derived from m/p TMI.

The term, "organic solvent soluble" is defined herein as a copolymer soluble to the extent of 2 parts by weight copolymer dissolved in 1 part by weight of 1-methoxy-2-propanol acetate at 25°C. Organic solvent solubility is a function of the copolymer's molecular weight. Preferred copolymers of the invention are organic solvent soluble in all proportions. The number average molecular weight (Mn) of the copolymers of the invention are from 2000 to 4000, with the range of 2800 to 3600 being particularly preferred.

The copolymers of the invention are required to have a high level of isocyanate functionality available for crosslinking in curable compositions. Thus, at least 8 weight percent based on the weight of copolymer of isocyanate functionality is present in the copolymer. The level of unreacted m/p TMI in the copolymer may be determined by gas chromatographic analysis.

The copolymers of the invention have a relatively narrow molecular weight distribution or polydispersity. This polydispersity measured as "d" in the ratio of weight average molecular weight divided by number average molecular weight (Mw/Mn) and is required to be no more than 2.2.

It is believed the reaction zone copolymer product should have no more than 1 weight percent of unconverted m/p TMI to be acceptable. In addition, the reaction zone copolymer product must have a "%f<2" of 2.5 or less. The "%f<2" measurement is defined as the percentage of components in the reaction zone product having an average isocyanate functionality of 2 or less.

The copolymer of this invention may be in the form of a purified solid polymer or a polymer dissolved in a solvent. Most preferred is the copolymer in the form of the reaction product of the invention with little or

no additional purification.

The Process for Making the Alternating Isocyanate Functional Copolymer of the Invention:

General:

The copolymer of the invention is prepared by the free-radical polymerization of the m/p TMI reactant with one or more unsaturated polymerizable esters as described by the following chemical formula:

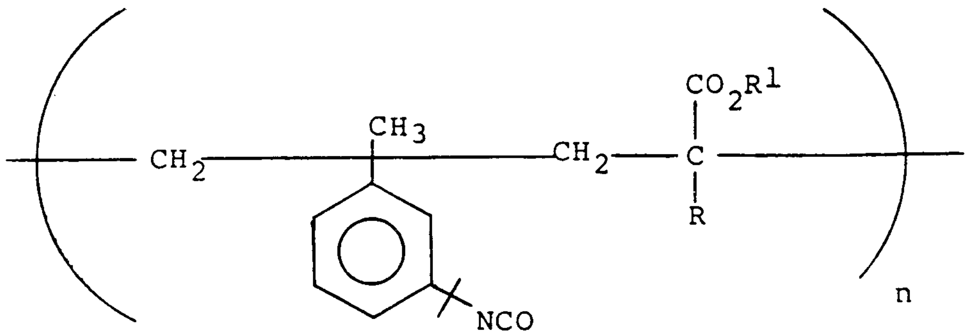

wherein $R^1$ is an organic radical and R is a hydrogen or methyl radical and n is an integer between 5 and 20.

The polymerization conditions set out below are critical to prepare the room temperature curing copolymer of the invention:

1. Monomer selection.
2. Suitable ratio of monomer to solvent in reaction zone.
3. Order of addition of reactants.
4. Free-radical initiator selection.
5. Use of chain transfer agents if low initiator concentrations are used.
6. m/p TMI conversion of at least 99%

Suitable Monomers for the Polymerization Process:

The m/p TMI essential reactant of the invention may be meta isopropenyl-α,α-dimethylbenzyl isocyanate; para-isopropenyl-α,α-dimethylbenzyl isocyanate or mixtures thereof.

The essential unsaturated comonomer reactant comprises as its major component from 60 to 45 mole percent (preferably 53 to 45 mole percent) of an unsaturated ester or mixture of unsaturated esters capable of free-radical polymerization. Suitable comonomers are unsaturated acrylates and methacrylates of from 4 to 12 carbon atoms. Particularly preferred as unsaturated comonomers are methyl acrylate (MA), ethyl acrylate, propyl acrylate, butyl acrylate (BA), ethylhexylacryate, methylmethacrylate, ethylmethacrylate, butylmethacrylate, ethylhexylmethacrylate, and mixtures thereof.

The most preferred unsaturated acrylate comonomers used in the preparation of the copolymer of the invention are methyl acrylate, butyl acrylate, and mixtures thereof.

It is possible to incorporate into the copolymer product small amounts of additional monomers which do not hinder the utility of the polymer. Thus, the comonomeric reactant may contain up to 5 mole percent of a non-isocyanate reactive monomer such as unsaturated aromatic compounds, alkenes, and unsaturated esters such as maleates and fumarates. Other specific suitable comonomeric reactants include α-methylstyrene, vinyl acetate, acrylonitrile, propene, and dodecene.

The polymerization process of this invention has a number of critical parameters needed to achieve the characteristics of the copolymer of the invention and the essentially complete reaction the m/p TMI monomer. It has been found that the conversion of the m/p TMI monomer must be in excess of 99 percent, because higher levels of unreacted m/p TMI are deleterious to the curing properties of the product copolymer when employed in curing compositions. Residual unreacted m/p TMI is monofunctional and effectively caps isocyanate reactive groups in the curing composition. Operation according to the process described herein results in at least 99 weight percent of the m/p TMI charged to the reaction zone being incorporated into the copolymer product.

It has been found that the polymerization process of this invention forms substantially alternating copolymers and does not form significant (not more than trace) amounts of either m/p TMI homopolymers or copolymers wherein the m/p TMI content is above 50 mole percent.

The Liquid Solvent Reaction Zone:

The reaction zone for the polymerization process contains a non-interfering non-polymerizable liquid which is a solvent both for the monomers and copolymer products of the invention. Suitable reaction media are selected from a non-reactive non-polymerizable liquid selected from the group consisting of esters, ketones, ethers, aromatic hydrocarbons, chlorinated hydrocarbons, aliphatic hydrocarbons, and mixtures thereof. Illustrative solvents are ethyl acetate, butylacetate, toluene, xylene, methyl ethyl ketone, 2-heptanone, 1,1,1-tri-chloroethane or mixtures thereof. The use of 1-methoxy-2-propanol acetate as a reaction media solvent is particularly preferred.

The weight ratio of monomers to total solvent is critical to the process of the invention. Thus, the final weight ratio of monomers dissolved into the solvent reaction medium should be from about 2:1 to about 20:1. It is a discovery of this invention that processes conducted with lower ratios of monomer to solvent (i.e., more solvent) do not yield copolymers with all the desired properties described herein.

Typically, in the process as taught herein, solvent is added both to the polymerization zone and to the reactor charge. The proportion of solvent in the reactor charge is usually less than 50 weight percent of the total weight of solvent used in the polymerization process.

Low monomer to solvent ratios typically result in reaction zone products having high residual unreacted m/p TMI and may require removal of excess solvent from highly viscous copolymeric solutions.

Order of Addition of Reactants to the Polymerization Zone:

The method of adding reactants to the process of the invention is important to obtaining the desirable characteristics of the copolymer product.

It is a critical aspect of this invention that organic solvent soluble, high isocyanate functional copolymers of the invention are formed by simultaneously adding the essential monomers and free-radical initiator into the reaction zone initially containing the liquid solvent medium for conducting the polymerization.

The simultaneous addition of reactor charge ingredients comprising monomers, initiator, and optionally, chain transfer agent is accomplished by premixing these ingredients shortly before the polymerization reaction. Alternatively, streams of ingredients may be combined just at the time of introduction into the reaction zone. Inferior copolymer properties such as insoluble gel formation, low conversion (less than 99%), and failure of curable compositions containing the copolymer (failure to cure in 4 days) result when, for example, the m/p TMI monomer is added to the reaction zone and the other reactant is thereafter added.

The m/p TMI monomer and unsaturated comonomer ingredients are typically added to the reaction zone in the mole proportions desired in the final copolymer product. Thus, by the practice of this invention copolymers are prepared containing monomeric units derived from 40 to 50 mole percent m/p TMI with the balance derived from the unsaturated comonomer.

The polymerization of the invention may be conducted by either a batch or continuous method. The batch process is desirably operated by gradually adding the essential monomers, catalyst, and other materials into the reaction zone containing solvent. The proper rate of addition may be judged by monitoring the exotherm of the polymerization reaction. It may be desirable in the batch process to add additional catalyst after all ingredients have been added to the reaction zone in order to insure complete reaction. At the conclusion of the reaction, distillation may be optionally used to reduce the level of any unreacted unsaturated ester or residual solvent.

The time and temperature of the polymerization reaction are not critical and generally vary from about 1/2 to 24 hours at reaction temperatures ranging from about 100°C. to about 150°C. The polymerization is usually conducted at autogeneous pressure although subatmospheric or superatmospheric pressures may be employed if desired.

Suitable Free-Radical Initiators:

A further critical aspect of the process of the invention necessary to obtaining the property of 4 day or less room temperature curing requires use of selected free-radical initiators. Common initiators used for free radical polymerization of unsaturated monomers are generally unsatisfactory in the process of the invention.

For example, azo-type initiators result in unacceptable levels of unreacted m/p TMI monomer or too great a polydispersity in the molecular weight distribution. Aliphatic peroxides typically give copolymer products having an unacceptable degree of yellowing but are otherwise satisfactory.

Perester type peroxides of the following generic formula are preferably used in the practice of the invention:

$R_1$-C(O)-O-O-$R_2$

wherein $R_1$ is an aliphatic or aromatic radical and $R_2$ is a tertiary alkyl radical.

Particularly preferred initiators for use in the process of the invention are peresters wherein $R_1$ is an aliphatic radical such as t-butyl- and t-amyl-.

Generally, the perester initiator is used at a concentration of less than 20 weight percent based on the weight of the total monomers (i.e., TMI and unsaturated ester). Usually the perester initiator is used at concentrations less than 12 weight percent, with a range of from 6 to 12 weight percent being particularly preferred.

It is a critical aspect of the process of this invention that the perester initiator be added to the reaction zone together with the monomeric reactants, as previously stated. However, it is permissable to add most of the peroxide with the monomeric reactants and add a minor amount of peroxide as a finishing step after the polymerization reaction has substantially ended. Such a finishing step has the purpose of removing minor amounts of unreacted monomers and aids in achieving a reaction zone product that may be used directly for the formulation of curable compositions. Thus, is is important that at least 70, and preferably at least 80, weight percent of the peroxide be added with the monomers and other essential ingredients and the balance of perester peroxide, if any, added at substantially the conclusion of the polymerization reaction. The conclusion of the polymerization reaction may be determined by monitoring the exotherm of the reaction zone and gas chromatographic analysis of the reaction mixture to monitor the unreacted TMI levels by gas chromatography.

Use of Chain Transfer Agents:

The polymerization process is advantageously conducted in the presence of tertiary amine or a tertiary mercaptan-type chain transfer agent. Tertiary mercaptans are preferred chain transfer agents in the practice of the invention. Failure to use a chain transfer agent will result in use of very high levels of perester initiator or yield a copolymer of too high molecular weight to have the required high organic solvent solubility.

Generally, the chain transfer agent is used at a concentration of less than 10 weight percent based on the weight of monomers added to the reaction zone.

There is a relationship between the levels of perester initiator and mercaptan chain transfer agent employed in the practice of the invention. The initiator must be used to form the product copolymer. Typically, to form copolymer of the required 2000-4000 molecular weight range very high initiator levels (in excess of 15 weight percent based on total monomers) must be used. Much lower initiator levels may be used if mercaptan chain transfer agent is also employed in the reaction zone. Thus, in the operation of the process one may use more initiator with less chain transfer agent or less initiator with more transfer agent depending on the relative cost and convenience of operating the process.

The reaction zone preferably has provision for agitation and heat exchange to assist uniformity and process control.

Purification:

The reaction product of the process of the invention is directly usable as the m/p TMI copolymer ingredient in a curable composition formulation. If desired, the reaction zone product may be subjected to distillation (at temperatures less than 150°C.) to remove unreacted unsaturated ester monomer. Other possible purification methods include precipitation from the solvent medium (e.g., addition of non-solvent to the reaction product) or solvent extraction.

The copolymer of the invention may also be chemically modified for suitable applications. Thus, where it is desirable to use "blocked" isocyanates the copolymers of the invention may be reacted with one or more blocking agents as known in the art. Unreacted isocyanate moieties include blocked isocyanate moieties which are capable of deblocking at moderate temperatures, as described in Polyurethane Technology edited by Paul F Bruins, Interscience Publishers, New York, pgs. 11-12. Suitable isocyanate blocking agents include phenol, catechol, hydrogen cyanide, diethyl malonate, ethylacetoacetate, caprolactam, isooctylphenol, 4-hydroxybiphenyl, oximes such as methylethylketone oxime, pyrazole, imidazole, and α-pyrrolidone. Generally, the use of blocking agents is for the preparation of copolymers used in relatively high temperature curing compositions. The temperature of the dissociation of the adduct formed by the blocking agent will generally be in the range of about 80°C. to about 250°C.

The Curable Composition of the Invention:

The curable composition of the invention comprises the following ingredients:

(1) a crosslinking effective amount of a substantially alternating, organic solvent soluble copolymer having a molecular weight of from about 2000 to about 4000, having at least about 8 weight percent unreacted isocyanate moieties and containing monomeric units derived from monomers consisting essentially of

(i) 40 to 50 mole percent of an isopropenyl-α,α-dimethylbenzyl isocyanate, and

(ii) 60 to 45 mole percent being an unsaturated ester, and

(iii) from zero to 5 mole percent of a non-isocyanate reactive polymerizable monomer, and;

(2) an isocyanate reactive material.

The isocyanate reactive material is broadly any active hydrogen containing material. In particular, the isocyanate reactive material may contain one or more of hydroxy, amino, amido, mercapto, or carboxy functional groups.

The most important group of isocyanate reactive materials for use in the curable composition of the invention are those containing predominantly or exclusively hydroxyl functionality. Low molecular weight polyols may be used. Suitable examples of low molecular weight polyols are ethylene glycol, propylene glycol, 1,2-butylene glycol, 1,4-butylene glycol, 1,6-hexylene glycol, glycerol, pentaerythritol, dipentaerythritol, tripentaerythritol, trimethylolethane, trimethylolpropane, anhydroenneaheptitol, (4744-47-2), 1,2,4-butanetriol, 1,2,6-hexanetriol, and mixtures thereof.

Higher molecular weight hydroxyl functional isocyanate reactive materials (Mn = about 800 to about 15,000) include hydroxy functional acrylic resins such as G-Cure™ 867, G-Cure™ 868 (products of Henkel Corp.), hydroxyl-terminated polyesters such as formed by the reaction of diacids and polyols, and hydroxy-terminated polyethers prepared by the base-catalyzed addition of alkylene oxides to polyfunctional alcohols, hydroxy-terminated hydrocarbon polymers (e.g., hydroxy terminated homo- and copolymers of butadiene), hydroxy terminated oligomeric urethanes, polyether polyols, and hydroxyl-terminated graft copolymers are usable in the curable composition of the invention.

Particularly preferred isocyanate reactive materials for use with the m/p TMI copolymers in the curable composition of this invention are commercially available hydroxy group containing acrylic resins. Characteristics of some of these commercial hydroxy containing acrylic resins are as follows:

a) G-CURE™ 867 Acrylic Resin, product of Henkel Corporation - a hydroxy functional acrylic copolymer reactive with isocyanates.

Viscosity - cP (≙ mPa•s) @ 25°C. = 3500-5000

Hydroxy Equivalent Weight (solid resin) = 600

b) G-CURE™ 868, Acrylic Resin, product of Henkel Corporation - a hydroxy functional acrylic copolymer reactive with isocyanates.

Viscosity - cP @ 25°C. = 4500-6500

Hydroxy Equivalent Weight (solid resin) = 800

The curable composition of the invention may consist essentially only of the copolymer of the invention and an isocyanate reactive material. This minimum formulation is capable of curing at high temperatures (viz., above 50°C.). However, it is a principle object of this invention to prepare curable compositions which are room temperature curable. A "Room Temperature Curable Composition" is defined herein as a composition having the ability to develop enough solvent resistance to pass the "MEK Rub Test" (described below) after coating on unprimed panels within 4 days at 25°C.

Isocyanate reactive materials which contain only amino groups as the isocyanate reactive functionality do not require the use of curing catalysts.

The ingredients (1) and (2) are combined with a curing catalyst to give a reactive composition which cures at room temperature. The curing catalyst is selected from those known in the art to promote urethane forming reactions. Suitable examples of curing catalysts having utility in the practice of the invention are organotin compounds or tertiary amines and combinations thereof.

Suitable tertiary amine curing catalysts include triethylenediamine, N-alkyl morpholines, N,N, N′,N′-tetramethylethylenediamine, and dialkylalkanolamines. Suitable organotin compounds are stannous octoate, stannous oleate, dimethyl tin dilaurate, tetrabutyldiacetoxystannoxane, dibutyltin dilaurate, dibutyltin di-2-ethylhexoate. Organotin curing catalysts are highly preferred in the practice of this invention. These tin curing agents are typically used at concentrations of about 0.1% to 0.5% based on the weight of polymer forming solids in the curable composition of the invention. Tin curing catalyst levels above 0.5 weight percent are generally undesirable because they likely promote degradation of the physical properties of the final crosslinked polymers.

The curing composition may be in the form of a mixed powder, or dispersed or dissolved together in a solvent or non-solvent.

The ratio of m/p TMI copolymer to isocyanate reactive material is typically such that the mole ratio of isocyanate groups in the copolymer to isocyanate reactive groups in ingredient (2) is from about 1:1.5 to about 1:0.5.

Crosslinked Polymeric Objects of the Invention:

Crosslinked polymeric objects of this invention are formed by activating the crosslinking isocyanate groups of the curable composition prepared according to this invention. Crosslinking of the curable composition is achieved by application of heat, ranging from about room temperature (25°C.) for a period of up to four days to about 125°C. using a quick bake cycle for periods as short as 1/2 minute. Curing at any temperature benefits from the inclusion of curing catalysts.

Relatively high cure temperatures (e.g., above 50°C.) can effect cure even in the absence of curing catalyst. However, room temperature curing is generally not possible for a hydroxy-containing isocyanate reactive material without a cure promoting effective amount of curing catalyst.

The completion of cure of the curable composition was ascertained by a solvent resistance test procedure of rubbing a coating comprising the cured composition with methyl ethyl ketone as solvent. The "MEK Rub Test" was conducted as follows:

A 0.0015 inch (.0381 mm.) wet film was deposited on a test panel substrate and the film was permitted to cure under the chosen conditions of time and temperature. The panel is fastened to a laboratory bench and rubbed back and forth at 2 pounds (0.9 kg.) pressure by the index finger wrapped with a soft cloth saturated with methyl ethyl ketone. One back and forth motion constituted a stroke. Rubbing was continued with inspection at suitable intervals for evidence of surface marking. The cloth was kept saturated by dipping into MEK solvent after each 10 strokes. The number of strokes necessary to mark the surface and the number of strokes to rub through was recorded as "(mark surface)/(rub through)".

The cured polymeric object of the invention may be in the form of a coating for the protection of a substrate. For example, the cured polymeric coating may be placed upon or impregnated into a substrate to afford protection from corrosive environments. Suitable substrates include wood, metal, and plastics in various structural forms.

The following Examples set forth specific embodiments of the instant invention as well exemplifying the consequences of operating outside of the process of the invention.

EXAMPLE I

Part A:

Example I, Part A, illustrates the preparation of the m-TMI/methylacrylate copolymer by the process of the invention.

A 1000 ml. 3 necked flask equipped with a vacuum sealed mechanical stirrer and a double jacketed water condenser with dry ice cold finger condenser attachment was thoroughly purged with argon (at least 24 hours). A cool (under 10°C.) mixture of (i) freshly distilled m-TMI (244.3g, 1.215 mole), (ii) methyl acrylate (115.1g, 1.337 mole), (iii) tert-butyl peroctoate (25.00g), (iv) dodecyl mercaptan (30.0g), and (v) methoxy propyl acetate (Arcosolv PM Acetate™ , a product of Arco Corporation) solvent (60.0g.), all stored over molecular sieves was metered into the 1000 ml. flask containing Arcosolv PM Acetate™ solvent (40.0g) maintained at about 125°C. over a period of 4 hours with vigorous stirring. After monomer mixture addition was complete, an additional 7.0 grams of tert-butyl peroctoate was added over a period of 90 minutes at 130°C. with continued stirring. After all reagents were added, the reaction mixture was kept at 140°C. for 1 hour and at 150°C. for 30 minutes. The mixture was then cooled to 100°C. and purged with a gentle stream of argon to remove traces of residual methyl acrylate (about 30 minutes) and the as is product at about 98 percent yield was transferred and stored under argon. Isocyanate levels in the copolymer product were determined by dibutylamine titration.

A one liter batch prepared by this procedure had the process parameters and physical properties summarized below:

| | |
|---|---|
| m-TMI monomer charge (g.) | 244.3 |
| unsaturated ester monomer charge, MA (g.) | 115.1 |
| m-TMI mole % of total monomer charge | 47.6 |
| total solvent (g.) | 100.0 |
| total monomer/solvent weight ratio | 3.6 |
| initiator, tert-butyl peroctoate (g.) | 32.0 |
| initiator added with monomers (%) | 78 |
| chain transfer agent, tert-dodecyl mercaptan (g.) | 30.0 |
| isocyanate wt. % in solid copolymer | 11.3 |
| molecular weight (number average by GPC) | 3487 |
| d (polydispersity by GPC) | 1.77 |
| %f<2 (by GPC) | 0.5 |
| Color (Yellow Index)* | less than 50 |
| converted m-TMI | 99.8 |

* Color value measured by the ASTM D 1638-74 method.

Notes to experimental results:

The polydispersity, "d" is Mw/Mn and is an estimate of the degree of molecular weight spread.
The "%f<2" measurement gives the percentage of components in the reaction zone product having a functionality of 2 or less.

Conclusions:

The copolymer of Example I Part A is prepared according to the method of the invention.

Part B:

This part of the Example shows curing of the copolymer produced in Example I, part A, using G Cure 867 acrylic resin (hydroxy functional acrylic resin, product of Henkel Corporation).

Cure Rate of m-TMI/MA Copolymers on 1200S Aluminum Using Copolymer of Example IA

FORMULATION

| Component A | |
|---|---|
| G Cure 867 (60% Solids) | 10.00 g |
| T-12 (10% Solution) | 0.48 g |
| Arcosolv PM Acetate | 4.10 g |
| Subtotal | 14.58 g |

| Component B | |
|---|---|
| Copolymer of Example IA (77.5% solids) | 4.80 g |
| Total (component A and B) | 19.38 g |
| Nonvolatiles | 50% |
| Gel Time | 3.0 hr |

Draw-down on 1200S Aluminum

CURE RESPONSE OF m-TMI COPOLYMER FROM EXAMPLE IA

| | | |
|---|---|---|
| Acrylic Resin | | G Cure 867 |
| Copolymer of Example | | IA |
| % T-12* | | 0.5 |
| 20 min/125°C. | thick, mils (mm) | 1.1 (0.027) |
| | knoop | 18.3 |
| | MEK | 200+ |
| 20 min/80°C. | thick, mils (mm) | 1.1 (0.027) |
| | knoop | 13.2 |
| | MEK | 200+ |
| R.T. | thick, mils (mm) | 1.2 (0.030) |
| 1 Day | knoop | 4.8 |
| | MEK | 40/90 |
| R.T. | knoop | 10.6 |
| 3 Days | MEK | 200+ |
| R.T. | knoop | 13.1 |
| 7 Days | MEK | 200+ |
| R.T. | knoop | 13.2 |
| 17 Days | MEK | 200+ |

* T-12 is organotin curing agent, Metacure T-12™, a product of Air Products Corporation

Conclusions:

The copolymer prepared according to the process of the invention, Part A, when used in a curable composition containing an isocyanate reactive material as in part B cured successfully at room temperature within 4 days.

EXAMPLE II

This Example illustrates the use of another initiator within the invention, t-amyl peroctoate, in the practice of the process of the invention.

Part A:

A 5000 ml. 4 necked flask equipped with vacuum sealed mechanical stirrer and a double jacketed water condenser with dry ice cold finger condenser attachment is thoroughly purged with argon. A cool (<10 degree C.) mixture of (i) freshly distilled m-TMI (1466 g., 7.294 mole), (ii) methyl acrylate (658.6 g., 7.658 mole), (iii) tert-amyl peroctoate (159.7 g.), (iv) tert-dodecyl mercaptan (180.0 g.) and (v) Arcosolv PM acetate (400 g.) was metered into the 5000 ml flask containing 200 g. of Arcosolv PM Acetate solvent. A temperature of 125°C. was maintained for a period of 4 hours with vigorous stirring. After monomer mixture addition was complete, an additional 44.7 grams of tert-amyl peroctoate was added over a period of 90 minutes at 123°C. with continued stirring. After all reagents were added, the reaction mixture was kept at 140°C. for 2 hours.

The mixture was then purged at 140°C. with argon to remove traces of residual methyl acrylate (about 30 minutes) and the as is product at about 98 percent yield transferred and stored.

A 5 liter batch prepared by the procedure of Example II had the process parameters and physical properties summarized below:

| | |
|---|---|
| m-TMI monomer charge (g.) | 1466 |
| unsaturated ester monomer charge MA (g.) | 658.6 |
| m-TMI mole % of total monomer charge | 48.8 |
| total solvent (g.) | 600 |
| monomer/solvent weight ratio | 3.5 |
| initiator, t-amylperoctoate (g.) | 204.4 |
| initiator added with monomers (%) | 78.1 |
| chain transfer agent (g.), tert-dodecyl mercaptan | 180.0 |
| isocyanate wt. % in solid copolymer | 11.9 |
| molecular weight (number average by GPC) | 3345 |
| d (polydispersity by GPC) | 1.47 |
| %f<2 (by GPC) | 0.1 |
| Color (Yellow Index) | less than 50 |
| converted m-TMI | 99.4 |
| Density (g./cu.cm.) | 1.08 |

Part B:

Cure Rate of m-TMI/MA Copolymers on Primed B-100 Panels Copolymers of Example II

| Component A | |
|---|---|
| G Cure 868 (60% Solids) | 13.30 g. |
| T-12 (10% Solution) | 0.58 g. |
| Arcosolv PM Acetate | 4.60 g. |
| Subtotal | 18.48 g. |

| Component B | |
|---|---|
| Copolymer of Example II (78.0% solids) | 4.50 g. |
| Total (component A and B) | 22.98 g. |
| Nonvolatiles | 50% |
| Gel Time | 0.75 hr |

Drawdowns on Primed Bonderite-100 Panels

| CURE DATA | | |
|---|---|---|
| Acrylic Resin | | G CURE™ 868 |
| Copolymer of Example | | II |
| % T-12 | | 0.5 |
| 20°/125°C. | thick, mils (mm)<br>knoop<br>MEK<br>adhesion | 1.2 (0.03 mm)<br>13.1<br>200 +<br>5 |
| 20°/80°C. | thick, mils (mm)<br>knoop<br>MEK<br>adhesion | 1.2 (0.03 mm)<br>6.9<br>200 +<br>5 |
| R.T 2 Days | thick, mils (mm)<br>knoop<br>MEK | 1.2 (0.03 mm)<br>2.6<br>200 + |
| R.T. 5 Days | knoop<br>MEK | 4.2<br>200 + |
| R.T. 7 Days | knoop<br>MEK<br>adhesion | 6.3<br>200 +<br>5 |

Conclusions:

A copolymer according to the invention was prepared using a perester catalyst different from Example I. It cured in less than 4 days at room temperature.

EXAMPLE III

The reaction apparatus and general methodology of Example I was employed except that the polymerization was conducted using a monomer to solvent weight ratio of 2.0: 1 and butyl acrylate was used as the comonomer.

A batch prepared by this procedure had the process parameters and physical properties summarized below:

| | |
|---|---|
| m-TMI monomer charge (g.) | 24.43 |
| unsaturated ester monomer charge, BA (g.) | 15.56 |
| m-TMI mole % of total monomer charge | 50.0 |
| total solvent (g.) | 20 |
| monomer/solvent weight ratio | 2.0 |
| initiator, tert-butyl perbenzoate (g.) | 8.0 |
| initiator added with monomers (%) | 86.7 |
| chain transfer agent, tert-dodecyl mercaptan (g). | none |
| isocyanate wt. % in solid copolymer | 9.4 |
| molecular weight (number average by GPC) | 2000 |
| d (polydispersity by GPC) | 1.7 |
| %f<2 (by GPC) | 2.2 |
| Color (Yellow Index) | less than 50 |
| converted m-TMI | 99.1 |

Conclusions:

This Example prepares a copolymer according to the process of the invention using a comonomer (butyl acrylate) and initiator different from that used in Example I.

EXAMPLE IV

This Example illustrates the preparation of the m-TMI/butylacrylate copolymer by a process which uses a free radical initiator different from that called for by the process of the invention.

The reaction apparatus and general methodology of Example I was employed except that the polymerization was conducted using butylacrylate as the unsaturated comonomer.

A one liter batch prepared by the procedure of Example IA had the process parameters and physical properties summarized below:

| | |
|---|---|
| m-TMI monomer charge (g.) | 24.43 |
| unsaturated ester monomer charge, BA (g.) | 15.56 |
| m-TMI mole % of total monomer charge | 50.0 |
| total solvent (g.) | 16.5 |
| monomer/solvent weight ratio | 2.42 |
| initiator, Vazo-52 (azo-type initiator) (g.) | 11.17 |
| initiator added with monomers (%) | 73.1 |
| chain transfer agent, tert-dodecyl mercaptan (g.) | none |
| isocyanate wt. % in solid copolymer | 10.9 |
| molecular weight (number average by GPC) | 1748 |
| d (polydispersity by GPC) | 2.46 |
| %f<2 (by GPC) | 10.7 |
| Color (Yellow Index) | less than 50 |
| converted m-TMI | 96.8 |

Conclusions:

The copolymer process and product of Example IV is outside the scope of the invention. The polydispersity, "d" is too high (maximum acceptable is 2.2) and the level of unreacted monomer, too high (maximum acceptable is 1%), and %f<2 was 10.7, also too high (maximum acceptable value is 2.5).

## EXAMPLE V

This Example illustrates the effect of order of addition of polymerization ingredients.

The reaction apparatus and general methodology of Example I was employed except that the polymerization was conducted using an azo-type free-radical initiator (VAZO-52, product of DuPont Company).

The order of adding reactants was changed. Specifically, all of the m-TMI was charged to the polymerization zone, then the comonomer (methyl acrylate), initiator, and chain transfer agent were gradually introduced into the reaction zone over a period of 1.33 hours at a rate of about 15 ml. per hour. At the end of the polymerization reaction 1.0 g. of VAZO-52, 5.22 g. of methyl acrylate, all dissolved in 10 g. of solvent was added to the reaction flask over a period of 1.33 hours.

A one liter batch prepared by the above procedure had the process parameters and physical properties summarized below:

| | |
|---|---|
| m-TMI monomer charge (g.) | 48.86 |
| unsaturated ester monomer charge, MA (g.) | 20.90 |
| m-TMI mole % of total monomer charge | 50.0 |
| total solvent (g.) | 30.0 |
| monomer/solvent weight ratio | 2.5 |
| initiator, VAZO-52 (g.) | 25.0 |
| initiator added with monomers (%) | 76.6 |
| chain transfer agent, tert-dodecyl mercaptan (g.) | none |
| isocyanate wt. % in solid copolymer | 12.2 |
| molecular weight (number average by GPC) | 1405 |
| d (polydispersity by GPC) | 2.1 |
| %f<2 (by GPC) | 7.0 |
| Color (Yellow Index) | greater than 50 |
| coverted m-TMI | 94.8 |

### Conclusions:

The copolymer produced by the process of Example V was not acceptable because the %f<2 was too high, and the level of unreacted m-TMI was unacceptably high. The copolymer resulting from this "reversed monomer charge" method failed to properly cure at room temperature.

## EXAMPLE VI

This Example illustrates the effect of the monomer to solvent ratio.

### Part A. Preparation of the Copolymer:

The reaction apparatus and general methodology of Example I was employed except that the polymerization was conducted using a monomer to solvent weight ratio of 0.27:1 and butyl acrylate was used as the comonomer.

The initiator used in Example VI was tertiarybutyl perbenzoate, a aromatic perester catalyst within the scope of the invention.

A batch prepared by this procedure had the process parameters and physical properties summarized below:

| | |
|---|---|
| m-TMI monomer charge (g.) | 24.43 |
| unsaturated ester monomer charge, BA (g.) | 15.56 |
| m-TMI mole % of total monomer charge | 50.0 |
| total solvent (g.) | 147.0 |
| monomer/solvent weight ratio | 0.27 |
| initiator, tert-butyl perbenzoate (g.) | 7.5 |
| initiator added with monomers (%) | 86.7 |
| chain transfer agent, tert-dodecyl mercaptan (g.) | none |
| isocyanate wt. % in solid copolymer | 12.1 |
| molecular weight (number average by GPC) | 1400 |
| d (polydispersity by GPC) | 1.2 |
| %f<2 (by GPC) | 3.2 |
| Color (Yellow Index) | less than 50 |
| converted m-TMI | 91.6 |

Conclusions:

The copolymer formed by the process of Example VIA had too low a conversion of m-TMI monomer and too high %f<2.

Part B.

Attempt was made to prepare a curable composition using the copolymer prepared in Example VI, Part A. The copolymer (5.97 parts) was mixed with 10.0 parts of G-Cure™ 867 acrylic resin, a hydroxy acrylic resin, (product of Henkel Corp.). The composition also contained 0.047 parts of T-12 curing catalyst used at a concentration of 0.5% of total resins solids, (dibutyl-tin dilaurate, product of Air Products Corp.). The cure response of the composition is set out below:

Cure Response of m-TMI Copolymer VIA

| Temperature/Time | Knoop | MEK Rub |
|---|---|---|
| 125°C./20 min. | 15.9 | 200+ |
| 80°C./20 min. | 12.6 | 20/50 |
| R.T./ 1 day | 3.4 | 10/25 |
| R.T./ 5 day | 11.2 | 30/130 |

Conclusions:

Cure was not successful since the curable composition of Example VIB did not possess the necessary room temperature curing properties. The copolymer used in this composition was prepared using a very low monomer to solvent ratio (too much solvent) and outside the critical process parameter ranges of this invention.

EXAMPLE VII

This Example illustrates the effect of using different free-radical initiators with methyl acrylate comonomer in the polymerization method of the invention. Dialkyl peroxide or azo type free radical initiators are used in the process of the invention.

Part A.

The reaction apparatus and general methodology of Example I was employed.

A batch prepared by the procedure of Example VII had the process parameters and physical properties summarized below:

| | |
|---|---|
| m-TMI monomer charge (g.) | 24.43 |
| unsaturated ester monomer charge, MA (g.) | 11.45 |
| m-TMI mole % of total monomer charge | 47.6 |
| total solvent (g.) | 10.0 |
| monomer/solvent weight ratio | 3.6 |
| initiator, di-t-butylperoxide (g.) | 3.7 |
| initiator added with monomers (%) | 81.1 |
| chain transfer agent, tert-dodecyl mercaptan (g.) | 4.0 |
| isocyanate wt. % in solid copolymer | 11.5 |
| molecular weight (number average by GPC) | 2430 |
| d (polydispersity by GPC) | 1.4 |
| %f<2 (by GPC) | 0.1 |
| Color (Yellow Index) | greater than 50 |
| converted m-TMI | 97.2 |

Conclusions:

The process of Example VII, Part A used a catalyst outside the scope of the invention. The percentage of unconverted m-TMI was unacceptably high and a trial curable composition prepared with this polymer failed to cure at room temperature within four days.

Part B.

The reaction apparatus and general methodology of Example I was employed, excepting an azo type initiator was used with the methyl acrylate comonomer.

A batch prepared by the procedure of Example VII, part B had the process parameters and physical properties summarized below:

| | |
|---|---|
| m-TMI monomer charge (g.) | 48.86 |
| unsaturated ester monomer charge, MA (g.) | 23.01 |
| m-TMI mole % of total monomer charge | 47.6 |
| total solvent (g.) | 20.0 |
| monomer/solvent weight ratio | 3.6 |
| initiator, Vazo-52 (g.) | 19.35 |
| initiator added with monomers (%) | 84.5 |
| chain transfer agent, tert-dodecyl mercaptan (g.) | none |
| isocyanate wt. % in solid copolymer | 11.6 |
| molecular weight (number average by GPC) | 2150 |
| d (polydispersity by GPC) | 2.49 |
| %f<2 (by GPC) | 5.4 |
| Color (Yellow Index) | less than 50 |
| converted m-TMI | 97.8 |

Conclusions:

The copolymer prepared by the process of Example VII, part B formed a curable composition, capable of cure in less than 4 days at room temperature, however, the copolymer was considered unacceptable on the basis of the too high level of residual m-TMI and the presence of byproducts from the very high level of

azo-type catalyst used resulting in %f<2 = 5.4.

EXAMPLE VIII

This Example illustrates the effect of operating the process of the invention without using a chain transfer agent in the reaction zone.

Part A:

The reaction apparatus and general methodology of Example I was employed, excepting a chain transfer agent was not used. Methylacrylate was used as the unsaturated ester comonomer.

A batch prepared by the above procedure had the process parameters and physical properties summarized below:

| | |
|---|---|
| m-TMI monomer charge (g.) | 48.86 |
| unsaturated ester monomer charge MA (g.) | 23.00 |
| m-TMI mole % of total monomer charge | 47.6 |
| total solvent (g.) | 30.0 |
| monomer/solvent weight ratio | 2.4 |
| initiator, t-butylperoctoate (g.) | 13.64 |
| initiator added with monomers (%) | 74.3 |
| chain transfer agent (g.), tert-dodecyl mercaptan | none |
| isocyanate wt. % in solid copolymer | 13.3 |
| molecular weight (number average by GPC) | 3520 |
| d (polydispersity by GPC) | 1.5 |
| %f<2 (by GPC) | 0.4 |
| Color (Yellow Index) | less than 50 |
| converted m-TMI | 99.75 |

Part B:

Cure Rate of m-TMI/MA Copolymers on 1200S Aluminum Copolymers of Example VIII

FORMULATION

| Component A | |
|---|---|
| G Cure 867 (60% Solids) | 10.00 g. |
| T-12 (10% Solution) | 0.46 g. |
| Arcosolv PM Acetate | 2.80 g. |
| Subtotal | 13.26 g. |

| Component B | |
|---|---|
| Copolymer of Example VIII Part A (64% solids) | 4.90 g. |
| total (component A and B) | 18.16 g. |
| Nonvolatiles | 50% |
| Gel Time | 2.0 hr. |

Drawdown on 1200S Aluminum

| CURE DATA | | |
|---|---|---|
| Acrylic Resin | | G Cure 867 |
| Copolymer of Example | | VIII |
| % T-12 | | 0.5 |
| 20 min./125°C. | thick, mils (mm)<br>knoop<br>MEK | 1.1 (0.027 mm)<br>16.5<br>200 + |
| 20 min./80°C. | thick, mils (mm)<br>knoop<br>MEK | 1.15 (0.028 mm)<br>13.1<br>200 + |
| R.T. 1 Day | thick, mils (mm)<br>knoop<br>MEK | 1.2 (0.030 mm)<br>5.4<br>200 + |
| R.T. 3 Days | knoop<br>MEK | 10.2<br>200 + |
| R.T. 7 Days | knoop<br>MEK | 10.8<br>200 + |
| R.T. 17 Days | knoop<br>MEK | 11.7<br>200 + |

Conclusions:

Very high catalyst levels are needed in the absence of chain transfer agents to obtain copolymers of acceptable molecular weight within the process of the invention.

EXAMPLE IX

This Example illustrates the preparation of a curable composition of the invention with a different hydroxy containing acrylic resin and the use of these compositions to form room temperature cured coatings.

The m-TMI copolymers of Examples VIII-A were used to prepare the curable compositions of this invention.

The specific formulations were as follows:

| Component A | |
|---|---|
| acrylic resin (1) G Cure 868 (g.)<br>T-12 catalyst (10% Solution)<br>Arcosolv PM Acetate<br>Subtotal | 26.60<br>1.15<br>8.20<br>35.95 |

| Component B | |
|---|---|
| Copolymer of Ex. VIII part A (64.0% solids)<br>Total | 9.80<br>45.75 |

All materials in Component A were mixed together. Component B was added to Component A immediately prior to use because estimated pot life was about one hour.

(1) Acrylic polyol resin (product of Henkel Corporation)

(2) Dibutyl tin dilaurate cure catalyst for isocyanate reaction with hydroxy functional resins, (product of Air Products Corporation)

Preparation of Coatings:

Draw-downs were made on primed bonderite-100 steel test panels from Oxy Metals Company following ASTM Standard Practice No. D 4147-82. Three panels were prepared from each formulation and were cured 20 minutes at 125°C., 20 minutes at 80°C., and at room temperature. The experimental results are given below:

| Film Performance | Example VIII-A Copolymer |
|---|---|
| 20 min./125°C. | |
| film thickness, mils (1)<br>knoop hardness (2)<br>solvent resistance, MEK double rubs to remove (3) | 1.2 (0.03 mm.)<br>12.7<br>200 + |
| 20 min./80°C. | |
| film thickness, mils (1)<br>knoop hardness (2)<br>solvent resistance, MEK double rubs to remove (3) | 1.3 (0.0325 mm)<br>6.9<br>200 + |
| Room Temperature/1 Day | |
| film thickness, mils (1)<br>knoop hardness (2)<br>solvent resistance, MEK double rubs to remove (3) | 1.2 (0.03 mm.)<br>1.5<br>150/200 + |
| Room Temperature/2 Day | |
| film thickness, mils (1)<br>knoop hardness (2)<br>solvent resistance, MEK double rubs to remove | 1.2 (0.03 mm.)<br>2.0<br>200 + |
| Room Temperature/7 Day | |
| film thickness, mils (1)<br>knoop hardness (2)<br>solvent resistance, MEK double rubs to remove (3) | 1.2 (0.03 mm.)<br>7.4<br>200 + |

(1) ASTM Standard Method D 1400-81

(2) ASTM Standard Test Method for Indentation Hardness of Organic Coatings D 1474-68

(3) Polymer resistance to methyl ethyl ketone double rubs

EXAMPLE X

This Example illustrates the effect of insufficient (i.e., less than 70% of total) amount of initiator added with monomers.

The reaction apparatus and general methodology of Example I was employed.

A batch prepared by the procedure of Example I had the process parameters and physical properties summarized below:

| | |
|---|---|
| m-TMI monomer charge (g.) | 24.43 |
| unsaturated ester monomer charge, BA (g.) | 15.56 |
| m-TMI mole % of total monomer charge | 50.0 |
| total solvent (g.) | 10.0 |
| monomer/solvent weight ratio | 4.0 |
| initiator, t-butylperoctoate (g.) | 4.2 |
| initiator added with monomers (%) | 59.5 |
| chain transfer agent (g.) | 3.0 |
| isocyanate wt. % in solid copolymer | 10.9 |
| molecular weight (number average by GPC) | 3600 |
| d (polydispersity by GPC) | 1.6 |
| %f<2 (by GPC) | 0.0 |
| Color (Yellow Index) | greater than 50 |
| % converted m-TMI | 99.89 |

Conclusions:

The polymerization process of Example X was outside the scope of the invention. Specifically, the major part of the initiator was not added at the same time as the monomers and other essential ingredients. Thus, only 59.5 weight percent of the initiator was added initially to the reaction zone and the balance of initiator added when the polymerization reaction was substantially concluded. The copolymer product of this process did not cure properly at room temperature.

EXAMPLE XI

This Example illustrates the use of all critical conditions within the practice of the process of the invention.

A 500 ml. 4 necked flask equipped with vacuum sealed mechanical stirrer and a double jacketed water condenser with dry ice cold finger condenser attachment is thoroughly purged with argon. A cool (<10°C.) mixture of (i) freshly distilled m-TMI (48.86 g.), (ii) methyl acrylate (22.90 g.), (iii) tert-butyl peroctoate (5.0 g.), (iv) dodecyl mercaptan (6.0 g.) and (v) Arcosolv PM Acetate™ (15.0 g.) was metered into the 500 ml. flask containing 5.0 g of Arcosolv PM Acetate solvent. A temperature of 125°C. was maintained for a period of 4 hours with vigorous stirring. After monomer mixture addition was complete, an additional 1.4 grams of tert-butyl peroctoate was added over a period of two hours at 130°C. with continued stirring. After all reagents were added, the reaction mixture was kept at 150°C. for 30 minutes.

The "as is" product at about 98 percent yield was transferred and stored.

The 0.5 liter batch prepared by the above procedure had the process parameters and physical properties summarized below:

| | |
|---|---|
| m-TMI monomer charge (g.) | 48.86 |
| unsaturated ester monomer charge, MA (g.) | 22.90 |
| m-TMI mole % of total monomer charge | 47.6 |
| total solvent (g.) | 20.0 |
| monomer/solvent weight ratio | 3.6 |
| initiator, t-butylperoctoate (g.) | 6.4 |
| initiator added with monomers (%) | 75 |
| chain transfer agent (g.) | 6.0 |
| isocyanate wt. % in solid copolymer | 11.4 |
| molecular weight (number average by GPC) | 3420 |
| d (polydispersity by GPC) | 1.7 |
| %f<2 (by GPC) | 0.4 |
| Color (Yellow Index) | less than 50 |
| converted m-TMI (%) | 99.2 |
| Density (g./cu.cm.) | 1.08 |

Conclusions:

An m-TMI copolymer having all desirable characteristics is prepared by following the practice of the invention.

The copolymer of Example XI was cured with G-Cure™ 867 and G-Cure 868™ Acrylic Resin with T-12 and UL-28** organotin catalysts. Table 1 describes the formulation and Table 2 summarizes the cure rates.

TABLE 1

| | | |
|---|---|---|
| G-Cure™ 868 (60% NV*) | - | 13.3 |
| G-Cure™ 867 (60% NV) | 10.0 | - |
| Copolymer of Example XI (80% solids) | 4.6 | 4.6 |
| T-12 or UL-28 (10% NV) | 0.5 | 0.6 |
| Arcosolv PM Acetate | 4.3 | 4.9 |
| | 19.4 | 23.4 |

* NV is non-volatile content

** FORMREZ UL-28 organotin catalyst, product of Witco Corporation

**TABLE 2:**

**CURE RATE OF m-TMI/MA COPOLYMER OF EXAMPLE XI**

| Acrylic Resin | | G-CURE™ 867 | | G-CURE™ 868 | |
|---|---|---|---|---|---|
| % UL-28[1] | | 0.5 | - | 0.5 | - |
| % T-12[2] | | - | 0.5 | - | 0.5 |
| GEL TIME | | 45 min. | 3+ hrs. | 30 min. | 90 min |
| 20 min./ 125°C. | Thick | 1.0 | 1.0 | 1.0 | 1.1 |
| | Knoop | 16.6 | 16.4 | 14.4 | 13.7 |
| | MEK | 200+ | 200+ | 200+ | 200+ |
| 20min./ 80°C. | Thick | 1.0 | 1.0 | 1.1 | 1.0 |
| | Knoop | 14.9 | 13.5 | 10.3 | 8.0 |
| | MEK | 200+ | 200+ | 200+ | 150/200 |
| Room Temperature 1 Day | Thick | 1.15 | 1.15 | 1.15 | 1.1 |
| | Knoop | 7.9 | 4.9 | 3.2 | 3.0 |
| | MEK | 200+ | 30/80 | 150/180 | 70/100 |
| Room Temperature 2 Days | Knoop | 11.5 | 10.4 | 5.0 | 5.7 |
| | MEK | 200+ | 100/200+ | 200+ | 170/200+ |
| Room Temperature 3 Days | Knoop | 13.2 | 12.2 | 6.4 | 6.2 |
| | MEK | 200+ | 200+ | 200+ | 200+ |
| Room Temperature 4 Days | Knoop | 13.4 | 12.7 | 7.0 | 6.6 |
| | MEK | 200+ | 200+ | 200+ | 200+ |
| Room Temperature 7 Days | Knoop | 14.2 | 14.4 | 7.7 | 7.0 |
| | MEK | 200+ | 200+ | 200+ | 200+ |

1 Organotin catalyst
2 Organotin catalyst

EXAMPLE XII

This example illustrates the use of all critical process conditions within the scope of the invention.

Part A

A 5000 ml. 4 necked flask was used under the conditions of Example II with four hour addition time at 110-115°C. More initiator was added at 115-120°C. over a period of two hours and kept at 120°C. for six hours. The "as is" product (after removal of volatiles under reduced pressure at 120°C.)gave an about 98% yield, and was transferred and stored. It had the process parameters and physical properties summarized below:

| | |
|---|---|
| m-TMI monomer charge (g.) | 1466 |
| unsaturated ester monomer charge, MA (g.) | 658.6 |
| m-TMI mole % of total monomer charge | 47.6 |
| total solvent (g.) | 600 |
| monomer/solvent weight ratio | 3.6 |
| initiator, t-amylperoctoate (g.) | 204.4 |
| initiator added with monomers (%) | 78.1 |
| chain transfer agent (g.) | 180.0 |
| isocyanate wt. % in solid copolymer | 12.1 |
| molecular weight (number average by GPC) | 3570 |
| d (polydispersity by GPC) | 1.67 |
| %f<2 (by GPC) | 0.1 |
| Color (Yellow Index) | less than 50 |
| % converted m-TMI | 99.3 |
| Density (g.cu.cm.) | 1.08 |
| Viscosity (cp) at RT | 9730 |

Part B

Cure Rate of m-TMI/MA Copolymers on Primed B-100 Panels Copolymers of Example XII

| Component A | |
|---|---|
| G Cure 868 (60% Solids) | 13.30 g. |
| T-12 (10% Solution) | 0.58 g. |
| Arcosolv PM Acetate | 4.50 g. |
| Subtotal | 18.38 g |

| Component B | |
|---|---|
| Copolymer of Example XII (75.8% solids) | 4.60 g. |
| Total (Component A and B) | 22.98 g. |
| Nonvolatiles | 50% |
| Gel Time | 0.70 hr. |

Drawdowns on Primed B-100 Panels

| CURE DATA | | |
|---|---|---|
| Acrylic Resin | | G Cure 868 |
| Copolymer of Example | | XII |
| % T-12 | | 0.5 |
| 20 min/125°C. | thick<br>knoop<br>MEK<br>adhesion | 1.2<br>12.4<br>200+<br>5 |
| 20 min/80°C. | thick<br>knoop<br>MEK<br>adhesion | 1.2<br>7.2<br>200+<br>5 |
| R.T. 2 Days | thick<br>knoop<br>MEK | 1.2<br>2.8<br>200+ |
| R.T. 5 Days | knoop<br>MEK | 3.6<br>200+ |
| R.T. 7 Days | knoop<br>MEK<br>adhesion | 5.2<br>200+<br>5 |

Part C

Cure Rate of m-TMI/MA Copolymer of Example XII with Capa 316™ Polymer*

FORMULATION

| Component A | |
|---|---|
| CAPA-316 (100% solids)<br>T-12 (10% Solution)<br>Arcosolv PM Acetate<br>Subtotal | 3.9 g.<br>0.5 g. (0.5% on Nonvolatiles)<br>3.9 g.<br>8.3 g. |

| Component B | |
|---|---|
| Copolymer of Example XII (75.8% Nonvolatiles)<br>Total (Component A and B)<br>Nonvolatiles<br>Gel Time (min.) | 6.9 g.<br>15.2 g.<br>60%<br>0.30 hr. |

Drawdown on 1200S Aluminum

* Capa 316 polycaprolactones, molecular weight 1,000 product of INTEROX Co.

CURE DATA

| | |
|---|---|
| **20 min./125°C.** | |
| film thickness, mils (mm) | 1.2 (0.03) |
| knoop hardness | 11.4 |
| MEK double rubs to remove | 200+ |
| **20 min./80°C.** | |
| film thickness, mils (mm) | 1.2 (0.03) |
| knoop hardness | 7.3 |
| MEK double rubs to remove | 200+ |
| **Room Temperature/1 Day** | |
| film thickness, mils (mm) | 1.2 (0.03) |
| knoop hardness | 2.6 |
| MEK double rubs to remove | 70/100 |
| **Room Temperature/2 Days** | |
| knoop hardness | 5.5 |
| MEK double rubs to remove | 170/200 |
| **Room Temperature/3 Days** | |
| knoop hardness | 5.5 |
| MEK double rubs to remove | 170/200 |
| **Room Temperature/4 Days** | Full Cure |

Conclusion:

An m-TMI copolymer having all desirable characteristics is prepared by the process of the invention.

## Claims

1. A substantially alternating, organic solvent soluble copolymer having a molecular weight (Mn) of from 2000 to 4000 and a polydispersity (d) of no more than 2.2, having at least 8 weight percent of unreacted isocyanate moieties and containing monomeric units derived from monomers consisting essentially of (i) 40 to 50 mole percent of an isopropenyl-$\alpha$,$\alpha$-dimethylbenzyl isocyanate, and (ii) 60 to 45 mole percent of an unsaturated ester, and (iii) from 0 to 5 mole percent of an non-isocyanate reactive polymerizable monomer.

2. The copolymer of Claim 1 having monomeric units derived from monomers consisting essentially of (i) 47 to 50 mole percent of isopropenyl-$\alpha$,$\alpha$-dimethylbenzyl isocyanate, and (ii) 53 to 45 mole percent of an unsaturated ester, and (iii) from 0 to 5 mole percent of a non-isocyanate reactive polymerizable monomer.

**3.** The copolymer of Claim 1 wherein the isopropenyl-α,α-dimethylbenzyl isocyanate is selected from meta-isopropenyl-α,α-dimethylbenzyl isocyanate; para-isopropenyl-α,α-dimethylbenzyl isocyanate and mixtures thereof.

**4.** The copolymer of Claim 1 wherein the unsaturated comonomer comprises acrylates, methacrylates, and mixtures thereof.

**5.** A process for preparing a substantially alternating, organic solvent soluble copolymer having a molecular weight (Mn) of from 2000 to 4000 and a polydispersity (d) of no more than 2.2, with at least 8 weight percent of unreacted isocyanate functionality and containing monomeric units consisting essentially of (i) 40 to 50 mole percent of an isopropenyl-α,α-dimethylbenzyl isocyanate, (ii) 60 to 45 mole percent of an unsaturated ester, and (iii) from 0 to 5 mole percent of a non-isocyanate reactive polymerizable monomer, said process comprising the following steps:

A) simultaneously adding reactor charge materials comprising:

1. 40 to 50 mole percent meta-/para-isopropenyl-α,α-dimethylbenzyl isocyanate monomer;
2. 60 to 45 mole percent unsaturated ester monomer,
3. 0 to 5 mole percent non-isocyanate reactive unsaturated monomer,
4. a perester free-radical initiator,
5. optionally, a solvent, and
6. optionally, a chain transfer agent.

B) introducing the reactor charge of step (A) into a reaction zone containing a non-isocyanate reactive solvent, with the proviso that the weight ratio of total monomers to total solvent in the reactor zone is from 2:1 to 20:1;

C) maintaining the reaction zone of step (B) containing reactor charge (A) at a temperature and for a time sufficient to polymerize at least 99 weight percent of the meta-/para-isopropenyl-α,α-dimethylbenzyl isocyanate monomer.

**6.** A curable composition comprising the following ingredients:

(1) a crosslinking effective amount of a substantially alternating, organic solvent soluble copolymer having a molecular weight (Mn) of from 2000 to 4000 and a polydispersity (d) of no more than 2.2, having at least 8 weight percent of unreacted isocyanate moieties and containing monomeric units derived from monomers consisting essentially of (i) 40 to 50 mole percent of an isopropenyl-α,α-dimethylbenzyl isocyanate, and (ii) 60 to 45 mole percent of an unsaturated ester, and (iii) from 0 to 5 mole percent of a non-isocyanate reactive polymerizable monomer, and;

(2) an isocyanate reactive material.

**7.** The composition of Claim 6 wherein the copolymer (1) has monomeric units derived from monomers consisting essentially of (i) 47 to 50 mole percent of an isopropenyl-α,α-dimethylbenzyl isocyanate, and (ii) 53 to 45 mole percent of an unsaturated ester and (iii) from 0 to 5 mole percent of a non-isocyanate reactive polymerizable monomer.

**8.** A room temperature curable composition comprising as essential ingredients:

(A) a substantially alternating, organic solvent soluble copolymer having a molecular weight (Mn) of from 2000 to 4000 and a polydispersity (d) of no more than 2.2, having at least 8 weight percent of unreacted isocyanate moieties and containing monomeric units derived from monomers consisting essentially of

(i) 40 to 50 mole percent of an isopropenyl-α,α-dimethylbenzyl isocyanate,
(ii) 60 to 45 mole percent of an unsaturated ester, and;
(iii) from 0 to 5 mole percent of a non-isocyanate reactive polymerizable monomer.

(B) an isocyanate reactive material, and;

(C) a curing catalyst.

**9.** A crosslinked polymeric object prepared by the process of curing a composition comprising:

(A) a substantially alternating, organic solvent soluble copolymer having a molecular weight (Mn) of from 2000 to 4000 and a polydispersity (d) of no more than 2.2, having at least 8 weight percent of unreacted isocyanate moieties and containing monomeric units derived from monomers consisting essentially of

(i) 47 to 50 mole percent of an isopropenyl-α,α-dimethylbenzyl isocyanate,

(ii) 53 to 45 mole percent of an unsaturated ester, and;
(iii) from 0 to 5 mole percent of a non-isocyanate reactive polymerizable monomer, and;
(B) an isocyanate reactive material.

**10.** A crosslinked polymeric alternating, organic solvent soluble copolymer having a molecular weight (Mn) of from 2000 to 4000 and a polydispersity (d) of no more than 2.2, having at least 8 weight percent of unreacted isocyanate moieties and containing monomeric units derived from monomers consisting essentially of
(i) 40 to 50 mole percent of an isopropenyl-α,α-dimethylbenzyl isocyanate,
(ii) 60 to 45 mole percent of an unsaturated ester, and;
(iii) from 0 to 5 mole percent of a non-isocyanate reactive polymerizable monomer,
(B) an isocyanate reactive material, and
(C) a curing catalyst.

## Patentansprüche

**1.** Im wesentlichen alternierendes, in organischem Lösungsmittel lösliches Copolymer mit einem Molekulargewicht (Mn) von 2000 bis 4000 und einer Polydispersität (d) von nicht mehr als 2,2, mit mindestens 8 Gewichtsprozent nichtumgesetzten Isocyanatgruppen und enthaltend monomere Einheiten, abgeleitet von Monomeren, im wesentlichen bestehend aus (i) 40 bis 50 Molprozent eines Isopropenyl-α,α-dimethylbenzylisocyanats und (ii) 60 bis 45 Molprozent eines ungesättigten Esters und (iii) 0 bis 5 Molprozent eines nicht mit Isocyanat umsetzbaren, polymerisierbaren Monomers.

**2.** Copolymer nach Anspruch 1 mit monomeren Einheiten, abgeleitet von Monomeren, im wesentlichen bestehend aus (i) 47 bis 50 Molprozent Isopropenyl-α,α-dimethylbenzylisocyanat und (ii) 53 bis 45 Molprozent eines ungesättigten Esters und (iii) 0 bis 5 Molprozent eines nicht mit Isocyanat umsetzbaren, polymerisierbaren Monomers.

**3.** Copolymer nach Anspruch 1, wobei das Isopropenyl-α, α-dimethylbenzylisocyanat ausgewählt ist aus Meta-Isopropenyl-α,α-dimethylbenzylisocyanat, Para-Isopropenyl-α,α -dimethylbenzylisocyanat und Mischungen davon.

**4.** Copolymer nach Anspruch 1, wobei das ungesättigte Comonomer Acrylate, Methacrylate und Mischungen davon umfaßt.

**5.** Verfahren zur Herstellung eines im wesentlichen alternierenden, in organischem Lösungsmittel löslichen Copolymers mit einem Molekulargewicht (Mn) von 2000 bis 4000 und einer Polydispersität (d) von nicht mehr als 2,2, mit mindestens 8 Gewichtsprozent nichtumgesetzten Isocyanatgruppen und enthaltend monomere Einheiten, im wesentlichen bestehend aus (i) 40 bis 50 Molprozent eines Isopropenyl-α,α-dimethylbenzylisocyanats, (ii) 60 bis 45 Molprozent eines ungesättigten Esters und (iii) 0 bis 5 Molprozent eines nicht mit Isocyanat umsetzbaren, polymerisierbaren Monomers, wobei das Verfahren die folgenden Schritte umfaßt:
A) Gleichzeitige Zugabe von Reaktorbeschickungsmaterialien, umfassend:
1. 40 bis 50 Molprozent Meta-/Para-Isopropenyl-α,α-dimethylbenzylisocyanatmonomer,
2. 60 bis 45 Molprozent ungesättigtes Estermonomer;
3. 0 bis 5 Molprozent nicht mit Isocyanat umsetzbares ungesättigtes Monomer,
4. einen Peroxyester-Initiator für freie Radikale,
5. gegebenenfalls ein Lösungsmittel und
6. gegebenenfalls ein Kettenübertragungsmittel.
B) Einbringen der Reaktorbeschickung von Schritt (A) in einen Reaktionsbereich, der ein nicht mit Isocyanat umsetzbares Lösungsmittel enthält, unter der Voraussetzung, daß das Gewichtsverhältnis der gesamten Momonere zu dem gesamten Lösungsmittel in dem Reaktorbereich 2:1 bis 20:1 beträgt.
C) Aufrechterhalten des Reaktionsbereichs von Schritt (B), der die Reaktorbeschickung (A) enthält, bei einer Temperatur und über einen Zeitraum, die zur Polymerisation von mindestens 99 Gewichtsprozent des Meta-/Para-Isopropenyl-α,α-dimethylbenzylisocyanatmonomers ausreichen.

**6.** Härtbare Zusammensetzung, welche die folgenden Inhaltsstoffe umfaßt:

(1) eine eine Vernetzung bewirkende Menge eines im wesentlichen alternierenden, in organischem Lösungsmittel löslichen Copolymers mit einem Molekulargewicht (Mn) von 2000 bis 4000 und einer Polydispersität (d) von nicht mehr als 2,2, mit mindestens 8 Gewichtsprozent nichtumgesetzten Isocyanatgruppen und enthaltend monomere Einheiten, die abgeleitet sind von Monomeren, im wesentlichen bestehend aus (i) 40 bis 50 Molprozent eines Isopropenyl-α,α-dimethylbenzylisocyanats und (ii) 60 bis 45 Molprozent eines ungesättigten Esters und (iii) 0 bis 5 Molprozent eines nicht mit Isocyanat umsetzbaren, polymerisierbaren Monomers; und

(2) ein mit Isocyanat umsetzbares Material.

**7.** Zusammensetzung nach Anspruch 6, wobei das Copolymer (1) monomere Einheiten aufweist, die abgeleitet sind von Monomeren, bestehend aus im wesentlichen (i) 47 bis 50 Molprozent eines Isopropenyl-α,α-dimethylbenzylisocyanats und (ii) 53 bis 45 Molprozent eines ungesättigten Esters und (iii) 0 bis 5 Molprozent eines nicht mit Isocyanat umsetzbaren, polymerisierbaren Monomers.

**8.** Bei Raumtemperatur härtbare Zusammensetzung, umfassend als wesentliche Inhaltsstoffe:

(A) ein im wesentlichen alternierendes, in organischem Lösungsmittel lösliches Copolymer mit einem Molekulargewicht (Mn) von 2000 bis 4000 und einer Polydispersität (d) von nicht mehr als 2,2, mit mindestens 8 Gewichtsprozent nichtumgesetzten Isocyanatgruppen und enthaltend monomere Einheiten, die von Monomeren abgeleitet wurden, die im wesentlichen aus folgendem bestehen:

(i) 40 bis 50 Molprozent eines Isopropenyl-α,α-dimethylbenzylisocyanats,

(ii) 60 bis 45 Molprozent eines ungesättigten Esters; und

(iii) 0 bis 5 Molprozent eines nicht mit Isocyanat umsetzbaren, polymerisierbaren Monomers.

(B) einem mit Isocyanat umsetzbaren Material, und;

(C) einem Härtekatalysator.

**9.** Vernetzter polymerer Gegenstand, hergestellt durch das Verfahren zur Härtung einer Zusammensetzung, umfassend:

(A) ein im wesentlichen alternierendes, in organischem Lösungsmittel lösliches Copolymer mit einem Molekulargewicht (Mn) von 2000 bis 4000 und einer Polydispersität (d) von nicht mehr als 2,2, mit mindestens 8 Gewichtsprozent nichtumgesetzten Isocyanatgruppen und enthaltend monomere Einheiten, die von Monomeren abgeleitet sind, die im wesentlichen aus folgendem bestehen:

(i) 47 bis 50 Molprozent eines Isopropenyl-α,α-dimethylbenzylisocyanats,

(ii) 53 bis 45 Molprozent eines ungesättigten Esters, und;

(iii) 0 bis 5 Molprozent eines nicht mit Isocyanat umsetzbaren, polymerisierbaren Monomers; und

(B) einem mit Isocyanat umsetzbaren Material.

**10.** Vernetztes, polymeres, alternierendes, in organischem Lösungsmittel lösliches Copolymer mit einem Molekulargewicht (Mn) von 2000 bis 4000 und einer Polydispersität (d) von nicht mehr als 2,2, mit mindestens 8 Gewichtsprozent nichtumgesetzten Isocyanatgruppen und enthaltend monomere Einheiten, die von Monomeren abgeleitet wurden, die im wesentlichen aus folgendem bestehen:

(i) 40 bis 50 Molprozent eines Isopropenyl-α,α-dimethylbenzylisocyanats,

(ii) 60 bis 45 Molprozent eines ungesättigten Esters, und;

(iii) 0 bis 5 Molprozent eines nicht mit Isocyanat umsetzbaren, polymerisierbaren Monomers,

(B) einem mit Isocyanat umsetzbaren Material, und

(C) einem Härtekatalysator.

## Revendications

**1.** Copolymère pratiquement alterné et soluble dans un solvant organique, possédant une masse moléculaire ($\overline{M}n$) allant de 2000 à 4000 et une polydispersité (d) ne dépassant pas 2,2, comportant au moins 8 % en poids de fragments isocyanate non transformés et renfermant des motifs monomères provenant de monomères comprenant essentiellement (i) 40 à 50 % en moles d'un isopropényl-α,α-diméthylbenzylisocyanate et (ii) 60 à 45 % en moles d'un ester insaturé, et (iii) 0 à 5 % en moles d'un monomère polymérisable non réactif avec un isocyanate.

**2.** Copolymère de la revendication 1, possédant des motifs monomères dérivés de monomères comprenant essentiellement (i) 47 à 50 % en moles d'un isopropényl-α,α-diméthylbenzylisocyanate et (ii) 53 à

45 % en moles d'un ester insaturé, et (iii) 0 à 5 % en moles d'un monomère polymérisable non réactif avec un isocyanate.

**3.** Copolymère de la revendication 1, dans lequel l'isopropényl-α,α-diméthylbenzylisocyanate est choisi parmi le m-isopropényl-α,α-diméthylbenzylisocyanate, le p-isopropényl-α,α-diméthylbenzylisocyanate et des mélanges de ces substances.

**4.** Copolymère de la revendication 1, dans lequel le comonomère insaturé comprend des acrylates, des méthacrylates et leurs mélanges.

**5.** Procédé de préparation d'un copolymère pratiquement alterné et soluble dans un solvant organique, possédant une masse moléculaire ($\overline{M}n$) allant de 2000 à 4000 et une polydispersité (d) ne dépassant pas 2,2, comportant au moins 8 % en poids de groupes isocyanate non transformés et renfermant des motifs monomères comprenant essentiellement (i) 40 à 50 % en moles d'un isopropényl-α,α-diméthylbenzylisocyanate et (ii) 60 à 45 % en moles d'un ester insaturé, et (iii) 0 à 5 % en moles d'un monomère polymérisable non réactif avec un isocyanate, ledit procédé comprenant les étapes suivantes:

A) addition simultanée de matériaux de charge réactionnelle comprenant:

1. 40 à 50 % en moles de monomère m-/p-isopropényl-α,α-diméthylbenzylisocyanate,
2. 60 à 45 % en moles de monomère ester insaturé,
3. 0 à 5 % en moles de monomère insaturé non réactif avec un isocyanate,
4. un amorceur radicalaire perester,
5. éventuellement, un solvant, et
6. éventuellement, un agent de transfert de chaîne;

B) introduction de la charge réactionnelle de l'étape (A) dans une zone réactionnelle renfermant un solvant non réactif avec un isocyanate, sous réserve que le rapport pondéral des monomères totaux au solvant total dans la zone du réacteur soit compris entre 2:1 et 20:1;

C) maintenir la zone réactionnelle de l'étape (B), contenant la charge réactionnelle (A), à une température et pendant un temps suffisants pour polymériser au moins 99 % en poids du monomère m-/p-isopropényl-α,α-diméthylbenzylisocyanate.

**6.** Composition durcissable comprenant les ingrédients suivants:

(1) une quantité efficace pour la réticulation d'un copolymère pratiquement alterné et soluble dans un solvant organique, dont la masse moléculaire ($\overline{M}n$) est comprise entre 2000 et 4000 et la polydispersité (d) n'est pas supérieure à 2,2, et comportant au moins 8 % en poids de fragments isocyanate non transformés et contenant des motifs monomères dérivés de monomères comprenant essentiellement (i) 40 à 50 % en moles d'un isopropényl-α,α-diméthylbenzylisocyanate et (ii) 60 à 45 % en moles d'un ester insaturé, ainsi que (iii) de 0 à 5 % en moles d'un monomère polymérisable non réactif avec un isocyanate, et

(2) un composé réactif avec un isocyanate.

**7.** Composition de la revendication 6, dans laquelle le copolymère (1) possède des motifs monomères dérivés de monomères comprenant essentiellement (i) 47 à 50 % en moles d'un isopropényl-α,α-diméthylbenzylisocyanate et (ii) 53 à 45 % en moles d'un ester insaturé, et (iii) 0 à 5 % en moles d'un monomère polymérisable non réactif avec un isocyanate.

**8.** Composition durcissable à température ambiante comprenant les ingrédients essentiels suivants:

(A) un copolymère pratiquement alterné et soluble dans un solvant organique, dont la masse moléculaire ($\overline{M}n$) est comprise entre 2000 et 4000 et la polydispersité (d) n'est pas supérieure à 2,2, et comportant au moins 8 % en poids de fragments isocyanate non transformés et contenant des motifs monomères dérivés de monomères comprenant essentiellement

(i) 40 à 50 % en moles d'un isopropényl-α,α-diméthylbenzylisocyanate

(ii) 60 à 45 % en moles d'un ester insaturé, et (iii) de 0 à 5 % en moles d'un monomère polymérisable non réactif avec un isocyanate;

(B) un composé réactif avec un isocyanate et

(C) un catalyseur de durcissement.

**9.** Article polymère réticulé préparé par le procédé de durcissement d'une composition comprenant:

(A) un copolymère pratiquement alterné et soluble dans un solvant organique, dont la masse moléculaire ($\overline{M}n$) est comprise entre 2000 et 4000 et la polydispersité (d) n'est pas supérieure à 2,2, comportant au moins 8 % en poids de fragments isocyanate non transformés et contenant des motifs monomères dérivés de monomères comprenant essentiellement
(i) 47 à 50 % en moles d'un isopropényl-α,α-diméthylbenzylisocyanate
(ii) 53 à 45 % en moles d'un ester insaturé, et (iii) de 0 à 5 % en moles d'un monomère polymérisable non réactif avec un isocyanate; et
(B) un composé réactif avec un isocyanate.

**10.** Copolymère réticulé alterné et soluble dans un solvant organique, dont la masse moléculaire ($\overline{M}n$) est comprise entre 2000 et 4000 et la polydispersité (d) n'est pas supérieure à 2,2, comportant au moins 8 % en poids de fragments isocyanate non transformés et contenant des motifs monomères dérivés de monomères comprenant essentiellement
(i) 40 à 50 % en moles d'un isopropényl-α,α-diméthylbenzylisocyanate
(ii) 60 à 45 % en moles d'un ester insaturé, et
(iii) de 0 à 5 % en moles d'un monomère polymérisable non réactif avec un isocyanate;
(B) un composé réactif avec un isocyanate, et
(C) un catalyseur de durcissement.